# EUROPEAN PATENT SPECIFICATION

(11) **EP 2 977 180 B1**
(45) Date of publication and mention of the grant of the patent: **19.12.2018**
(21) Application number: 13879020.9
(22) Date of filing: 27.04.2013
(51) Int. Cl.: B29C 45/64, B29C 49/56, B29C 49/36, B29L 22/00

(54) **LINK MECHANISM FOR OPENING AND CLOSING DIE AND POSITIONING BOTTOM DIE BY SINGLE SHAFT**
VERBINDUNGSMECHANISMUS ZUM ÖFFNEN UND SCHLIESSEN EINES GESENKS UND POSITIONIEREN EINES UNTERGESENKS ANHAND EINER EINZELWELLE
MÉCANISME ARTICULÉ POUR OUVRIR ET FERMER UNE MATRICE ET POSITIONNER UNE MATRICE INFÉRIEURE PAR UN SEUL ARBRE

(30) Priority: 19.03.2013 CN 201310088507
(43) Date of publication of application: 27.01.2016
(73) Proprietor: Jiangsu Newamstar Packaging Machinery Co., Ltd, Zhangjiagang, Jiangsu 215624 (CN)
(72) Inventor: DONG, Hailong, Zhangjiagang Jiangsu 215624 (CN); RUI, Xiaoju, Zhangjiagang Jiangsu 215624 (CN); YANG, Xinliang, Zhangjiagang Jiangsu 215624 (CN); HE, Deping, Zhangjiagang Jiangsu 215624 (CN)
(74) Representative: De Vries & Metman
(86) International application number: PCT/CN2013/074916
(87) International publication number: WO 2014/146323

(56) References cited:
- WO-A1-2006/029585
- CN-A- 102 133 797
- CN-A- 102 962 989
- CN-U- 203 157 126
- DE-A1-102007 008 023
- US-A1- 2006 093 699
- US-A1- 2010 203 185
- US-A1- 2012 177 771

## Description

### Field of the Invention

The present invention relates to the field of processing equipment for a beverage bottle, and more particularly to a mould opening and closing mechanism and a bottom mould positioning mechanism of a bottle blowing machine.

### Description of the Related Art

Generally a bottle blowing machine comprises a mould opening and closing mechanism and a bottom mould positioning mechanism. A conventional mould opening and closing mechanism comprises a machine frame, a fixed mould plate and a moving mould plate which are mounted on the machine frame. A mould locking mechanism is provided at the joint of the fixed mould plate and the moving mould plate. The moving mould plate is L-shaped and driven by a mould opening and closing air cylinder. The mould opening and closing air cylinder drives a spline, and the spline drives a moving mould plate gear mounted on a gear shaft, and the gear shaft is connected with the moving mould plate and mounted on a support frame.

A conventional bottom mould positioning mechanism, for example, a bottom mould locking mechanism of a linear bottle blowing machine as disclosed in patent publication No. CN201755911U, comprises a mould mounting plate, a bottle mould, a bottom mould, an actuating mechansim, a positioning mechanism and a supporting seat. The end of the cavity of the bottle mould is sleeved with the bottom mould which is connected with the actuating mechanism. The positioning mechanism is horizontally disposed on the support seat and comprises a positioning block air cylinder and a positioning block connected with each other. The actuating mechanism comprises a bottom mould mounting plate and a bottom mould elevating air cylinder. An upper surface of the bottom mould mounting plate is connected with the bottom mould, and a lower surface of the bottom mould mounting plate is connected with the bottom mould elevating air cylinder which is mounted on a support frame.

A bottom mould locking mechanism with double shafts is disclosed in patent publication No. US 2010203185A1. A blow mold consists of mold halves and a base part, which can be positioned by a lifting device. There are two shafts, one extends in the longitudinal direction of the blowing station and another drive shaft. To predetermine positioning motions, the base part is connected by a connecting rod with a positioning lever, which is connected with the drive shaft. A device for blow-molding containers disclosed in patent publication No. US2012177771A1, comprises blower members, each of which comprises a stationary mold portion and a movable mold portion that is movable by control means between an open position and a closed position for the mold. The movable mold portion is provided with reinforcement having one side secured to a shaft. The movable mold portion is associated with a member for blocking it in the closed position. The blocking member comprises a strut having one end secured to pivot shaft. The control means comprise two cranks fastened respectively to the two shafts.

Thus, in the prior art, the mould opening and closing mechanism and the bottom mould positioning mechanism are complicated in configuration and bulky, and each mechanism is self-driven, thereby leading to the inconvenience of operation and high cost.

### Summary of the Invention

An object of the invention is to provide an improved linkage of mould opening and closing and bottom mould positioning.

In order to solve the above technical problem, the following technical solution is utilized in the invention.

A system comprising a bottle blow moulding machine having a machine frame, a linkage of mould opening and closing and bottom mould positioning, mounted on the bottle blowing machine, comprising
a mould opening and closing assembly having a mould opening state and a mould closing state, which comprises a bottom mould movable relative to a machine frame of the bottle blowing machine in up-down direction, a fixed mould plate fixedly disposed on the machine frame, and a moving mould plate rotatable relative to the machine frame; and
a bottom mould positioning assembly for fixing the bottom mould with the machine frame of the bottle blowing machine;
whereby, when the mould opening and closing assembly is in the mould closing state, the moving mould plate is engaged with the fixed mould plate, and the moving mould plate, the fixed mould plate and the bottom mould together enclose to provide a cavity.

The bottom mould positioning assembly comprises:
a stop block disposed at the bottom of the moving mould plate;
a sliding block slidable relative to the machine frame;
a swing member swingably connected on the machine frame around a first axis for driving the sliding of sliding block; and
a rotation member rotatable relative to the machine frame for driving the swinging of the swing member relative to the machine frame during its rotation, and the rotation member and the moving mould plate are fixedly connected on a rotation shaft which is driven by a power source to rotate a second axis,
whereby, when the mould opening and closing assembly is in the mould closing state, both the sliding block and the stop block are inserted between the bottom mould and the machine frame and contact against the bottom mould. And when the mould opening and closing assembly is in the mould opening state, the moving mould plate is opened relative to the fixed mould plate, and the stop block and the sliding block are detached from the bottom mould.- The first axis and the second axis are parallel to each other. The rotation of the rotation member and the moving mould plate is driven by the rotation of the rotation shaft, and the rotation of the rotation member drives the swinging of the swing member and the sliding of the sliding block, that is to say, the rotation of the moving mould plate can lead to the mould closing of the mould opening and closing assembly and simultaneously make the stop block at the bottom thereof rotate with it, such that the stop block and the sliding block together restrict the bottom mould in the mould closing state, and release the bottom mould in the mould opening state.

Preferably, a through-hole is opened on each of the rotation member and the moving mould plate, and the rotation shaft sequentially extends through the rotation member and the moving mould plate from top to bottom and connects with them.

More preferably, the bottom mould positioning assembly also comprises a guide rail fixedly disposed on the machine frame, and the sliding block is slidably disposed on the guide rail along the guide rail. Preferably, the guide rail is a linear rail, with the traction of the swing member, the sliding block slides on the guide rail back and forth, such that the sliding block can position the bottom mould in the mould closing state and leave the bottom mould to release the bottom mould in the mould opening state. Still more preferably, the rotation member has a guiding surface thereon and the swing member is provided with a protrusion, the protrusion slidably contacts with the guiding surface relative to each other, and the distance between the second axis and the contacting position of the protrusion with the guiding surface changes with the rotation of the rotation member, such change will produce a guiding effect on the protrusion, such that the protrusion is moved and the swing member can swing around the first axis.

Preferably, an elastic member is arranged between the swing member and the machine frame for providing a restoring force for the swing member. In the course of rotation of the rotating member, when the contact position of the protrusion with the guiding surface gets farther and farther from the second axis, the swing member is pushed by the rotating member to swing. Otherwise, in the course of rotation of the rotating member, when the contact position of the protrusion with the guiding surface gets nearer and nearer to the second axis, an external force is required to drive the swing member to swing, and the elastic member is used for providing such an external force. Certainly, the external force can be provided in other ways, for example, the swing member is driven by the rotating member.

Preferably, a projection is formed on the sliding block and a sliding groove is opened on the swing member at a distance from the first axis, the projection is slidably inserted into the sliding groove. The portion of the swing member where the sliding groove is opened forms a transmission fork configuration, the swing member controls the sliding of the sliding block by means of the transmission fork configuration.

In a particular embodiment, the mould opening and closing assembly also comprises a locking mechanism for locking the fixed mould plate with the moving mould plate in the mould closing state, the locking mechanism comprises at least one first connecting convex platform formed on the moving mould plate and a second connecting convex platform formed on the fixed mould plate for cooperating with the first connecting convex platform, a pin hole is opened on the first connecting convex platform , a mounting hole is opened on the second connecting convex platform, and a locking pin is movably or extendably inserted into the mounting hole of the second connecting convex platform, a connecting shaft extends through the fixed mould plate, and the connecting shaft is connected with the locking pin in a transmission way. When the mould opening and closing assembly is in the mould closing state, the locking pin extends through the second connecting convex platform and into the pin hole to lock the moving mould plate with the fixed mould plate, in such a way that the locking pin is allowed to be detached from the pin hole and enter into the mounting hole of the second connecting convex platform.

In a specific embodiment, the machine frame comprises a support frame, an upper frame located above the support frame and an upright frame fixedly connected between the support frame and the upper frame, both the mould opening and closing assembly and bottom mould positioning assembly are located above the support frame, a through-hole is opened on the support frame, the rotation shaft rotatably extends through the through-hole such that a lower portion of the rotation shaft extends below the support frame. The swing member is swingably connected on the support frame around the first axis, and the guide rail as described before may be fixedly provided on the support frame. Based on such a design, the power source, the actuating mechanisms located between the power source and the rotation shaft and the like can be arranged below the support frame, such that the space below the support frame can be reasonably utilized, and the configuration of the whole bottle blowing machine is more compact.

Due to the above technical solution, the present invention has the following advantages as compared with the prior art: the linkage of the mould opening and closing assembly and the bottom mould positioning assembly are driven by one rotation shaft. Thus, the driving is achieved by a simple configuration, and the device of the invention has simple structure, convenient operation and small volume.

### Brief Description of the Drawings

Fig.1 is a first schematic drawing of a linkage of the invention according to the invention, wherein the mould opening and closing is in the mould closing state;

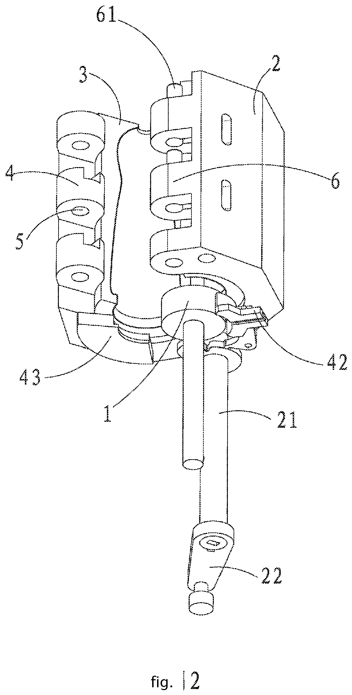

Fig.2 is a schematic drawing of a linkage of the invention according to the invention, wherein the mould opening and closing is in the mould opening state;
Fig.3 is a second schematic drawing of a linkage of the invention according to the invention, wherein the mould opening and closing is in the mould closing state;

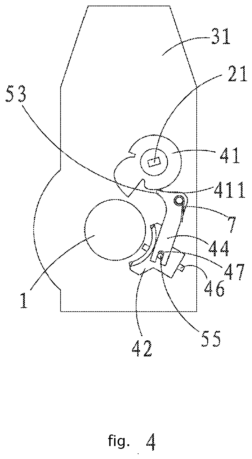

Fig.4 is a top view of a bottom mould positioning mechanism according to the invention, wherein the mould opening and closing is in the mould opening state;
Fig.5 is a top view of the bottom mould positioning mechanism according to the invention, wherein the mould opening and closing is in the mould closing state.

Wherein: 1. a bottom mould; 2. a fixed mould plate; 3. a moving mould plate; 4. a first connecting convex platform; 5. a pin hole; 6. a second connecting convex platform; 61. a locking pin; 7. a torsional spring; 21. a rotation shaft; 22. a swing arm; 31. a support frame; 32. an upper frame; 33. an upright frame; 41. a rotation member; 411. a guiding surface; 42. a sliding block; 43. a stop block; 44. a swing member; 46. a guide rail; 53. a protrusion; 55. a projection; 47. a sliding groove.

### Description of the Preferred Embodiments

The present invention will be described hereinafter with reference to the accompanying drawings. It is to be noted, however, that the drawings are given only for illustrative purpose and therefore not to be considered as limiting of its scope, for the invention may admit to other equally effective embodiments.

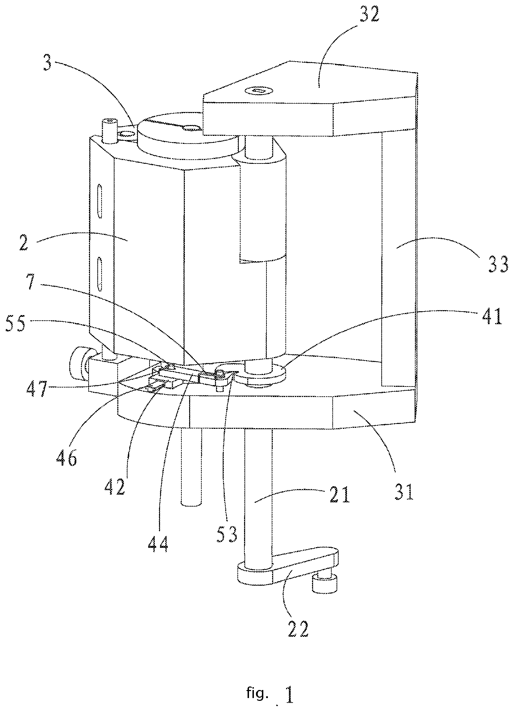

Fig.1 shows a linkage of mould opening and closing and bottom mould positioning, and this linkage is mounted on a bottom blowing machine. The bottle blowing machine is a device well known in the art, thus, only some parts involved by the invention are illustrated in drawings, instead of the whole bottom blowing machine.

Fig.s 2-5 more clearly illustrates a mould opening and closing assembly, a bottom mould positioning assembly for positioning the bottom mould 1 and the machine frame of the bottle blowing machine relative to each other, and a driving assembly for driving the movement of the mould opening and closing assembly and the bottom mould positioning assembly. The components will be described in more detail hereinafter.

The mould opening and closing assembly comprises a bottom mould 1 movable in up-down direction, a fixed mould plate 2 fixedly disposed on the machine frame of the bottle blowing machine and a moving mould plate 3 cooperating with the fixed mould plate 2. The mould opening and closing assembly has a mould opening state and a mould closing state, when in the mould closing state, the moving mould plate 3 is engaged with the fixed mould plate 2, such that the bottom mould 1, the fixed mould plate 2 and the moving mould plate 3 together enclose to provide a cavity, and the fixed mould plate 2 and the moving mould plate 3 respectively are provided with a mould. The mould opening and closing assembly also comprises a locking mechanism for locking the fixed mould plate 2 with the moving mould plate 3 in the mould closing state. At least one first connecting convex platform 4 is provided on the moving mould plate 3, in this embodiment, there are three first connecting convex platforms 4, and a notch is formed between adjacent two first connecting convex platforms 4.A pin hole 5 is opened on each first connecting convex platform 4, and the pin hole 5 extends through the first connecting convex platform 4 in up-down direction. The fixed mould plate 2 is provided with second connecting convex platforms 6 cooperating with the first connecting convex platforms. A mounting hole (not shown) is opened on each second connecting convex platform 6, and a locking pin 61 is movably or extendably provided in the second connecting convex platform 6. A connecting shaft (not shown) extends through the fixed mould plate 2, and the connecting shaft is connected with the locking pin 6 in a transmission way. The quantity of the locking pins 61 is the same as that of the pin holes 5. The connecting shaft and locking pins can extend along parallel axes. The transmission way of the connecting shaft and the locking pins 6 can be selected by one skilled in the art from ways well known in prior art, it itself does not relate to the technical points of the invention, and thus will not be described in more detail.

When the mould opening and closing assembly is in the mould closing state, the first connecting convex platforms 4 of the moving mould plate 3 are cooperated and connected with the second connecting convex platforms 6 of the fixed mould plate 2, the locking pins 61 are driven by the connecting shaft to extend through the second connecting convex platforms 6 and into the pin holes 5, such that the moving mould plate 3 and the fixed mould plate are locked relatively. Also, the connecting shaft also can drive the locking pins 6 such that the locking pins 6are detached from the pin holes 5 and enter into the mounting holes of the second connecting convex platforms 6,and the moving mould plate 3 is opened from the fixed mould plate 2.

The bottom mould positioning assembly comprises a first positioning unit and a second positioning unit located at two opposite sides of the bottom mould 1.

The first positioning unit comprises a rotation member 41 rotatable around a second axis relative to the machine frame, a swing member 44 which can be controlled by the rotation member 41 to rotate around a first axis relative to the machine frame, and a sliding block 42 slidable relative to the machine frame.

The first and second axes are not shown in drawings, however, the position of which should be appreciated in the drawing. Preferably, the first and second axes are parallel to each other.

A guiding surface 411 is formed on the rotation member 41 and a protrusion 53 is provided on the swing member 44, the protrusion 53 slides along the guiding surface 411. The distance between the contacting position of the protrusion 53 with the guiding surface 411 and the second axis changes with the rotation of the rotation member 41. With the rotation of the rotation member 41, the protrusion 53 moves due to the guiding effect of the guiding surface 411, thereby leading to the swinging of the swing member 44.

Preferably, a torsional spring 7 is arranged between the swing member 44 and the machine frame for providing a restoring force for the swing member 44. As shown in fig.s 1 and 4-5, in the course of rotation of the rotating member, when the contact position of the protrusion 53 with the guiding surface 411 gets farther and farther away from the second axis, the swing member is pushed by the rotating member to swing. Otherwise, in the course of rotation of the rotating member, when the contact position of the protrusion 53 with the guiding surface 411 gets nearer and nearer to the second axis, an external force is required to drive the swing member to swing, and the torsional spring 7 is used for providing such an external force. Certainly, the external force can be provided in other ways, for example, the swing member 44 is driven by the rotating member 41.

A projection 55 is formed on the upper surface of the sliding block 42, and a sliding groove 47 is opened on the other end of the swing member 44, the projection 55 is slidably inserted into the sliding groove 47.

Preferably, the first positioning unit also comprises a guide rail 46 fixedly disposed on the machine frame, and the sliding block 42 slides along the guide rail 46.

The second positioning unit comprises a stop block 43 fixedly disposed at the bottom of the moving mould plate 3.

When the mould opening and closing assembly is in the mould closing state, both the sliding block 42 and the stop block 43 are inserted between the bottom mould 1 and the machine frame and contact against the bottom mould 1. When the mould opening and closing assembly is in the mould opening state, the moving mould plate 3 is opened relative to the fixed mould plate 2, and the stop block 43 and the sliding block 42 are detached from the bottom mould 1.

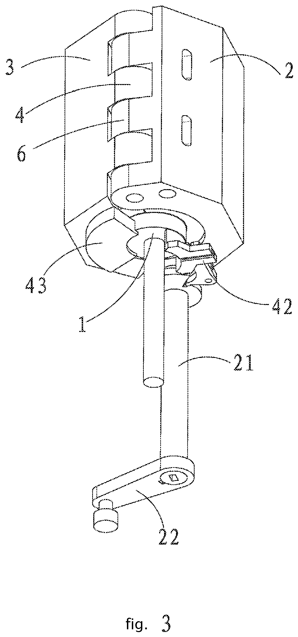

A driving assembly comprises a rotation shaft 21 rotatable around the second axis, a power source for driving the rotation of the rotation shaft 21, the moving mould plate and the rotation member 41 are fixedly connected with the rotation shaft 21. The rotation shaft 21 shown in drawings is configured as a cylinder structure, and its' shaft axis is the second axis. The rotation shaft 21 sequentially extends through the rotation member 41 and the moving mould plate 3 from top to bottom and drives them to rotate. A swing arm 22 is connected on a lower end of the rotation shaft 21, and the power source drives the rotation shaft 21 to rotate by means of the driving swing arm 22. In this way, when the mould closing is desired, the power source drives the swing arm 22 to drive the rotation of the rotation shaft 21, such that the moving mould plate 3 rotates with the rotation of the rotation shaft 21 and draws close to the fixed mould plate 2, and the stop block 43 located at the bottom of the moving mould plate 3 also moves with the moving mould plate 3, meanwhile, the rotation member 41 rotates with the rotation shaft 21, such that the swing member 44 drives the sliding block 42 to slide until the stop block is located between the bottom mould 1 and the machine frame and contacts against them, the sliding block 42 also contacts against the bottom mould 1 between the bottom mould 1 and the machine frame, such that the bottom mould 1 is clamped and positioned, as shown in figs.3 and 5, vice versa, this will not be further described in more detail. From this, the linkage of the mould opening and closing and bottom mould positioning is achieved.

Referring to the fig.s 1 and 4-5, the above-mentioned machine frame comprises a support frame 31, an upper frame 32 located above the support frame 31 and an upright frame 33 fixedly connected between the support frame 31 and the upper frame 32. Both the mould opening and closing assembly and bottom mould positioning assembly are located above the support frame 31, the swing member is rotatably connected with the support frame 31, and the guide rail 46 is fixedly disposed on the support frame 31. A through-hole is opened on the support frame 31 for the rotation shaft 21 extending through therein, and the rotation shaft 21 is rotatable within the through-hole. The lower portion of the rotation shaft 21 is located below the support frame 31, the swing arm 22 and the power source also are located below the support frame 31, and the upper end of the rotation shaft 21 is rotatably connected with the upper frame 32.

The above embodiment is described for illustrating the technical concept and features of the invention, the aim is intended to enable a person skilled in the art to appreciate the content of the invention and further implement it, and the protecting scope of the invention can not be limited hereby.

## Claims

1. A system comprising:
- a bottle blow moulding machine having a machine frame,
- a linkage for mould opening and closing and bottom mould positioning, mounted on the bottle blowing machine, comprising:
- a mould opening and closing assembly having a mould opening state and a mould closing state, which comprises:
- a bottom mould (1) movable relative to the machine frame of the bottle blowing machine in up-down direction,
- a fixed mould plate (2) fixedly disposed on the machine frame, and
- a moving mould plate (3) rotatable relative to the machine frame; and
- a bottom mould positioning assembly for fixing the bottom mould (1) with the machine frame of the bottle blowing machine; whereby when the mould opening and closing assembly is in the mould closing state, the moving mould plate (3) is engaged with the fixed mould plate (2), and the moving mould plate (3), the fixed mould plate (2) and the bottom mould (1) together enclose to provide a cavity; wherein the bottom mould positioning assembly comprises:
- a stop block (43) disposed at the bottom of the moving mould plate (3);
- a sliding block (42) slidable relative to the machine frame;
- wherein when the mould opening and closing assembly is in the mould closing state, both the sliding block (42) and the stop block (43) are inserted between the bottom mould (1) and the machine frame and contact against the bottom mould (1), and
- wherein when the mould opening and closing assembly is in the mould opening state, the moving mould plate (3) is opened relative to the fixed mould plate (2), and the stop block (43) and the sliding block (42) are detached from the bottom mould (1),
the system being **characterized in** further comprising:
- a swing member (44) swingably connected on the machine frame around a first axis for driving the sliding of sliding block (42); and
- a rotation member (41) rotatable relative to the machine frame for driving the swinging of the swing member relative to the machine frame during its rotation, and the rotation member (41) and the moving mould plate (3) being fixedly connected on a rotation shaft (21) which is driven by a power source to rotate a second axis,
- wherein the first axis and the second axis are parallel to each other.

2. The system as claimed in claim 1, wherein a through-hole is opened on each of the rotation member (41) and the moving mould plate (3), and the rotation shaft (21) sequentially extending through the rotation member (41) and the moving mould plate (3) from top to bottom and connecting with them.

3. The system as claimed in claim 1, wherein the bottom mould positioning assembly also comprises a guide rail (46) fixedly disposed on the machine frame, the sliding block (42) being slidably disposed on the guide rail (46) along the guide rail (46).

4. The system as claimed in claim 1, wherein the rotation member (41) has a guiding surface (411) thereon and a protrusion (53) is provided on the swing member (44), the protrusion (53) slidably contacting with the guiding surface (411) relative to each other, and the distance between the second axis and the contacting position of the protrusion (53) with the guiding surface (411) changing with the rotation of the rotation member (41).

5. The system as claimed in claim 1 or 4, wherein an elastic member is arranged between the swing member (44) and the machine frame for providing a restoring force for the swing member (44).

6. The system as claimed in claim 1 or 3, wherein a projection (55) is formed on the sliding block (42) and a sliding groove (47) is opened on the swing member (44) at a distance from the first axis, the projection (55) being slidably inserted into the sliding groove (47).

7. The system as claimed in claim 1, wherein the mould opening and closing assembly also comprises a locking mechanism for locking the fixed mould plate (2) with the moving mould plate (3) in the mould closing state, the locking mechanism comprising:
at least one first connecting convex platform (4) formed on the moving mould plate (3), a pin hole (5) being opened on the first connecting convex platform (4);
a second connecting convex platform (6) formed on the fixed mould plate (2) for cooperating with the first connecting convex platform (4), , a mounting hole being opened on the second connecting convex platform (6); and
a locking pin (61) being movably or extendably inserted into the mounting hole of the second connecting convex platform (6),a connecting shaft extending through the fixed mould plate (2), and the connecting shaft being connected with the locking pin (61) in a transmission way;
when the mould opening and closing assembly is in the mould closing state, the locking pin(61) extends through the second connecting convex platform (6) and into the pin hole (5) to lock the moving mould plate (3) with the fixed mould plate (2), in such a way that the locking pin (61) is allowed to be detached from the pin hole (5)and enter into the mounting hole of the second connecting convex platform (6) .

8. The system as claimed in claim 1, wherein the machine frame comprises a support frame (31), an upper frame (32) located above the support frame (31) and an upright frame (33) fixedly connected between the support frame (31) and the upper frame (32), both the mould opening and closing assembly and bottom mould positioning assembly being located above the support frame (31), a through-hole being opened on the support frame (31), the rotation shaft (21) rotatably extending through the through-hole such that a lower portion of the rotation shaft (21) extends below the support frame (31).

9. The system as claimed in claim 1, wherein the swing member is swingably connected on the support frame (31) around a first axis.

## Patentansprüche

1. System aufweisend:
- eine Flaschenblasformmaschine mit einem Maschinenrahmen;
- einen an der Flaschenblasformmaschine angeordneten Verbindungsmechanismus zum Öffnen/Schließen einer Matrize und Positionieren einer Bodenmatrize, aufweisend:
- eine Matrizen-Öffnungs-und-Schließ-Anordnung, die einen Matrizenöffnungszustand und einen Matrizenschließzustand hat und aufweist:
- eine Bodenmatrize (1), die relativ zu dem Maschinenrahmen der Flaschenblasformmaschine in Aufwärts/Abwärts-Richtung bewegbar ist,
- eine stationäre Matrizenplatte (2), die fest an dem Maschinenrahmen angeordnet ist, und
- eine mobile Matrizenplatte (3), die relativ zu dem Maschinenrahmen drehbar ist; und
- eine Bodenmatrize-Positionierungsanordnung zum Fixieren der Bodenmatrize (1) mit dem Maschinenrahmen der Flaschenblasformmaschine; wobei, wenn die Matrizen-Öffnungs-und-Schließ-Anordnung in dem Matrizenschließzustand ist, die mobile Matrizenplatte (3) im Eingriff mit der stationären Matrizenplatte (2) ist, und die stationäre Matrizenplatte (2), die mobile Matrizenplatte (3) und die Bodenmatrize (1) zusammen einen Hohlraum umschließen; wobei die Bodenmatrize-Positionierungsanordnung aufweist:
- einen Anschlagblock (43), der an einer Unterseite der mobilen Matrizenplatte (3) angeordnet ist;
- einen Gleitblock (42), der relativ zu dem Maschinenrahmen gleitbar ist;
- wobei, wenn die Matrizen-Öffnungs-und-Schließ-Anordnung in dem Matrizenschließzustand ist, sowohl der Gleitblock (42) als auch der Anschlagblock (43) zwischen der Bodenmatrize (1) und dem Maschinenrahmen angeordnet sind und in Kontakt mit der Bodenmatrize (1) sind, und
- wobei, wenn die Matrizen-Öffnungs-und-Schließ-Anordnung in dem Matrizenöffnungszustand ist, die mobile Matrizenplatte (3) relativ zu der stationären Matrizenplatte (2) geöffnet ist, und der Anschlagblock (43) und der Gleitblock (42) von der Bodenmatrize (1) weggerückt sind,
wobei das System **dadurch gekennzeichnet ist, dass** es ferner aufweist:
- ein um eine erste Achse schwenkbar an dem Maschinenrahmen angebrachtes Schwenkglied (44) zum Antreiben des Gleitens des Gleitblocks (42); und
- ein relativ zu dem Maschinenrahmen drehbares Drehglied (41) zum Antreiben des Schwenkens des Schwenkglieds relativ zum Maschinenrahmen während seiner Drehung, wobei das Drehglied (41) und die mobile Matrizenplatte (3) fest an einer Drehwelle (21) angebracht sind, die von einer Energiequelle angetrieben wird, um eine zweite Achse anzutreiben, wobei die erste Achse und die zweite Achse parallel zueinander sind.

2. System nach Anspruch 1, wobei sowohl an dem Drehglied (41) als auch an der mobilen Matrizenplatte (3) ein Durchgangsloch ausgespart ist, und die Drehwelle (21) sich der Reihe nach von oben nach unten durch das Drehglied (41) und die mobile Matrizenplatte (3) erstreckt und mit diesen verbunden ist.

3. System nach Anspruch 1, wobei die Bodenmatrize-Positionierungsanordnung desweiteren eine fest an dem Maschinenrahmen angeordnete Führungsschiene (46) aufweist, wobei der Gleitblock (42) an der Führungsschiene (46) angeordnet ist und entlang der Führungsschiene (46) gleitbar ist.

4. System nach Anspruch 1, wobei das Drehglied (41) eine Führungsfläche (411) aufweist und ein Nocken (53) an dem Schwenkglied (44) bereitgestellt ist, wobei der Nocken (53) und die Führungsfläche (411) relativ zueinander in Gleitkontakt sind und der Abstand zwischen der zweiten Achse und der Kontaktposition des Nockens (53) mit der Führungsfläche (411) sich mit der Drehung des Drehglieds (41) ändert.

5. System nach Anspruch 1 oder 4, wobei zwischen dem Schwenkglied (44) und dem Maschinenrahmen ein elastisches Glied angeordnet ist, um eine Rückstellkraft für das Schwenkglied (44) bereitzustellen.

6. System nach Anspruch 1 oder 3, wobei an dem Gleitblock (42) ein Vorsprung (55) gebildet ist und an dem Schwenkglied (44) in einem Abstand zur ersten Achse eine Gleitrille (47) ausgespart ist, wobei der Vorsprung (55) gleitbar in der Gleitrille (47) eingesetzt ist.

7. System nach Anspruch 1, wobei die Matrizen-Öffnungs- und-Schließ-Anordnung desweiteren einen Verriegelungsmechanismus aufweist, um in dem Matrizenschließzustand die stationäre Matrizenplatte (2) mit der mobilen Matrizenplatte (3) zu verriegeln, wobei der Verriegelungsmechanismus aufweist:
mindestens eine an der mobilen Matrizenplatte (3) gebildete erste konvexe Verbindungsplattform (4), wobei ein Nadelloch (5) an der ersten Verbindungsplattform (30) ausgespart ist;
eine an der stationären Matrizenplatte (2) gebildete zweite konvexe Verbindungsplattform (6) zum Zusammenwirken mit der ersten konvexen Verbindungsplattform (4), wobei an der zweiten konvexen Verbindungsplattform (6) ein Befestigungsloch ausgespart ist; und
einen Verriegelungsstift (61), der bewegbar oder erweiterbar in dem Befestigungsloch der zweiten konvexen Verbindungsplattform (6) eingesetzt ist, wobei ein Verbindungsschaft sich durch die stationäre Matrizenplatte (2) erstreckt und der Verbindungsschaft über eine Transmission mit dem Verriegelungsstift (61) verbunden ist;
wobei, wenn die Matrizen-Öffnungs-und-Schließ-Anordnung in dem Matrizenschließzustand ist, der Verriegelungsstift (61) sich durch die zweite konvexe Verbindungsplattform (6) und in das Nadelloch (5) erstreckt, um die mobile Matrizenplatte (3) mit der stationären Matrizenplatte (2) zu verriegeln, derart, dass dem Verriegelungsstift (61) erlaubt ist, sich aus dem Nadelloch (5) zu lösen und in das Befestigungsloch der zweiten konvexen Verbindungsplattform (6) einzutreten.

8. System nach Anspruch 1, wobei der Maschinenrahmen einen Trägerrahmen (31), einen oberhalb des Trägerrahmens (31) angeordneten oberen Rahmen (32) und einen fest zwischen dem Trägerrahmen (31) und dem oberen Rahmen (32) verbundenen aufrechten Rahmen (33) aufweist, wobei sowohl die Matrizen-Öffnungs-und-Schließ-Anordnung als auch die Bodenmatrize-Positionierungsanordnung oberhalb des Trägerrahmens (31) angeordnet sind, ein Durchgangsloch an dem Trägerrahmen (31) ausgespart ist, die Drehwelle (21) sich drehbar durch das Durchgangsloch erstreckt, so dass sich ein unterer Abschnitt der Drehwelle (21) unterhalb des Trägerrahmens (31) erstreckt.

9. System nach Anspruch 1, wobei das Schwenkglied um eine erste Achse schwenkbar an dem Trägerrahmen (31) angebracht ist.

## Revendications

1. Système comprenant :
- une machine de moulage par soufflage de bouteilles ayant un châssis de machine,
- une tringlerie pour l'ouverture et la fermeture de moule et le positionnement de moule de fond, montée sur la machine de soufflage de bouteilles, comprenant :
- un ensemble d'ouverture et de fermeture de moule ayant un état d'ouverture de moule et un état de fermeture de moule, qui comprend :
- un moule de fond (1) mobile par rapport au châssis de machine de la machine de soufflage de bouteilles dans une direction de haut en bas,
- une plaque de moule fixe (2) disposée à demeure sur le châssis de machine, et
- une plaque de moule mobile (3) rotative par rapport au châssis de machine ; et
- un ensemble de positionnement de moule de fond pour fixer le moule de fond (1) avec le châssis de machine de la machine de soufflage de bouteilles ; moyennant quoi lorsque l'ensemble d'ouverture et de fermeture de moule est dans l'état de fermeture de moule, la plaque de moule mobile (3) est engagée avec la plaque de moule fixe (2), et la plaque de moule mobile (3), la plaque de moule fixe (2) et le moule de fond (1) se referment ensemble pour fournir une cavité ; dans lequel l'ensemble de positionnement de moule de fond comprend :
- un bloc d'arrêt (43) disposé au fond de la plaque de moule mobile (3) ;
- un bloc coulissant (42) qui coulisse par rapport au châssis de machine ;
- dans lequel lorsque l'ensemble d'ouverture et de fermeture de moule est dans l'état de fermeture de moule, le bloc coulissant (42) et le bloc d'arrêt (43) sont tous deux insérés entre le moule de fond (1) et le châssis de machine et viennent en contact contre le moule de fond (1), et
- dans lequel lorsque l'ensemble d'ouverture et de fermeture de moule est dans l'état d'ouverture de moule, la plaque de moule mobile (3) est ouverte par rapport à la plaque de moule fixe (2), et le bloc d'arrêt (43) et le bloc coulissant (42) sont détachés du moule de fond (1),
le système étant **caractérisé en ce qu'**il comprend en outre :
- un organe d'oscillation (44) raccordé en oscillation sur le châssis de machine autour d'un premier axe pour entraîner le coulissement du bloc coulissant (42) ; et
- un organe de rotation (41) rotatif par rapport au châssis de machine pour entraîner l'oscillation de l'organe d'oscillation par rapport au châssis de machine pendant sa rotation, et l'organe de rotation (41) et la plaque de moule mobile (3) étant raccordés à demeure sur un arbre de rotation (21) qui est entraîné par une source d'alimentation pour tourner autour d'un second axe,
- dans lequel le premier axe et le second axe sont parallèles l'un à l'autre.

2. Système selon la revendication 1, dans lequel un trou traversant est ouvert sur chacun de l'organe de rotation (41) et de la plaque de moule mobile (3), et l'arbre de rotation (21) s'étend séquentiellement à travers l'organe de rotation (41) et la plaque de moule mobile (3) de haut en bas et se raccorde avec eux.

3. Système selon la revendication 1, dans lequel l'ensemble de positionnement de moule de fond comprend également un rail de guidage (46) disposé à demeure sur le châssis de machine, le bloc coulissant (42) étant disposé en coulissement sur le rail de guidage (46) le long du rail de guidage (46).

4. Système selon la revendication 1, dans lequel l'organe de rotation (41) comporte une surface de guidage (411) dessus et une protubérance (53) est prévue sur l'organe d'oscillation (44), la protubérance (53) venant en contact en coulissement avec la surface de guidage (411) l'une par rapport à l'autre, et la distance entre le second axe et la position de contact de la protubérance (53) avec la surface de guidage (411) changeant avec la rotation de l'organe de rotation (41).

5. Système selon la revendication 1 ou 4, dans lequel un organe élastique est agencé entre l'organe d'oscillation (44) et le châssis de machine pour fournir une force de rappel à l'organe d'oscillation (44).

6. Système selon la revendication 1 ou 3, dans lequel une saillie (55) est formée sur le bloc coulissant (42) et une gorge coulissante (47) est ouverte sur l'organe d'oscillation (44) à une distance du premier axe, la saillie (55) étant insérée en coulissement dans la gorge coulissante (47).

7. Système selon la revendication 1, dans lequel l'ensemble d'ouverture et de fermeture de moule comprend également un mécanisme de verrouillage pour verrouiller la plaque de moule fixe (2) avec la plaque de moule mobile (3) dans l'état de fermeture de moule, le mécanisme de verrouillage comprenant :
au moins une première plateforme convexe de raccordement (4) formée sur la plaque de moule mobile (3), un trou de goupille (5) étant ouvert sur la première plateforme convexe de raccordement (4) ;
une seconde plateforme convexe de raccordement (6) formée sur la plaque de moule fixe (2) pour coopérer avec la première plateforme convexe de raccordement (4), un trou de montage étant ouvert sur la seconde plateforme convexe de raccordement (6) ; et
une goupille de verrouillage (61) insérée de façon mobile et extensible dans le trou de montage de la seconde plateforme convexe de raccordement (6), un arbre de raccordement s'étendant à travers la plaque de moule fixe (2), et l'arbre de raccordement étant raccordé à la goupille de verrouillage (61) avec capacité de transmission ;
lorsque l'ensemble d'ouverture et de fermeture de moule est dans l'état de fermeture de moule, la goupille de verrouillage (61) s'étend à travers la seconde plateforme convexe de raccordement (6) et dans le trou de goupille (5) pour verrouiller la plaque de moule mobile (3) avec la plaque de moule fixe (2), de manière à permettre à la goupille de verrouillage (61) de se détacher du trou de goupille (5) et d'entrer dans le trou de montage de la seconde plateforme convexe de raccordement (6).

8. Système selon la revendication 1, dans lequel le châssis de machine comprend un châssis de support (31), un châssis supérieur (32) situé au-dessus du châssis de support (31) et un châssis vertical (33) raccordé à demeure entre le châssis de support (31) et le châssis supérieur (32), l'ensemble d'ouverture et de fermeture de moule et l'ensemble de positionnement de moule de fond étant tous deux situés au-dessus du châssis de support (31), un trou traversant étant ouvert sur le châssis de support (31), l'arbre de rotation (21) s'étendant en rotation à travers le trou traversant de sorte qu'une portion inférieure de l'arbre de rotation (21) s'étende en dessous du châssis de support (31).

9. Système selon la revendication 1, dans lequel l'organe d'oscillation est raccordé en oscillation sur le châssis de support (31) autour d'un premier axe.
